Europäisches Patentamt

European Patent Office

Office européen des brevets

(19)

(11) EP 0 605 267 B1

(12) **FASCICULE DE BREVET EUROPEEN**

(45) Date de publication et mention
de la délivrance du brevet:
**04.03.1998 Bulletin 1998/10**

(51) Int Cl.⁶: **H04J 3/22**

(21) Numéro de dépôt: **93402902.6**

(22) Date de dépôt: **30.11.1993**

(54) **Trame multidébit et dispositif de multiplexage de données à débits non multiples**

Rahmen mit mehreren Übertragungsraten und Anordnung zur Multiplexierung von nicht-ganzzahligen Bitraten

Multirate frame and device for multiplexing data of non-multiple bit rates

(84) Etats contractants désignés:
**DE ES GB IT**

(30) Priorité: **30.12.1992 FR 9215926**

(43) Date de publication de la demande:
**06.07.1994 Bulletin 1994/27**

(73) Titulaire: **FRANCE TELECOM**
**75015 Paris (FR)**

(72) Inventeurs:
- **Bourgart, Fabrice**
  **F-22700 Perros-Guirec (FR)**
- **Audrain, Eric**
  **F-22300 Lannion (FR)**

(74) Mandataire: **Cabinet Martinet & Lapoux**
**BP 405**
**78055 Saint Quentin en Yvelines Cédex (FR)**

(56) Documents cités:
**EP-A- 0 485 260**    **EP-A- 0 491 495**

## Description

La présente invention concerne de manière générale le domaine de l'accès multiple à répartition dans le temps (AMRT) dans des systèmes de télécommunications. Plus précisément l'invention a trait aux techniques de partage d'une trame entre plusieurs équipements d'usager, la trame étant une trame multivitesse, également appelée multidébit. Dans une telle trame, divers débits en ligne associés à diverses stations terminales se côtoient et sont transmis à travers un même support de transmission.

La demande de brevet européen EP-A-O 485 260 décrit un procédé de multiplexage-démultiplexage numérique multidébit ayant recours à une trame multidébit dans laquelle des débits en ligne dans des secteurs temporels la constituant sont différents. Tous les secteurs de la trame ont une même durée et tous les débits dans les secteurs respectifs sont sous-multiples d'un plus grand débit en ligne. Ainsi, dans chaque secteur de la trame, le nombre de bits de données est un sous-multiple du nombre de bits de données d'un secteur au plus grand débit. Ceci signifie que chaque phase de début de bit d'un premier bit d'un secteur coïncide avec l'instant de début de ce secteur.

Par ailleurs, la technique ATM (Asynchronous Temporal Mode), basée sur un mode de transfert asynchrone de données sous la forme de cellules élémentaires de 53 octets incluant en outre des informations de routage, s'est imposée ces dernières années auprès des exploitants de réseaux de télécommunications comme une technique incontournable pour la commutation de données à haut débit.

Aujourd'hui deux orientations sont envisageables pour développement et l'intégration des techniques ATM dans les réseaux de télécommunications existants, notamment en distribution.

Selon une première orientation, le débit ATM normalisé à 155,52à Mbit/s est augmenté sensiblement en un débit de 196,608 Mbit/s, ce dernier étant ainsi rendu multiple des débits de la hiérarchie numérique plésiochrome (n x 2,408 Mbit/s). Les techniques de multiplexage des débits de la hiérarchie numérique plésiochrome et ATM utilisées en distribution pourraient alors être du type de celle présentée dans la EP-A-0 485 260. Il est à noter que cette augmentation de débit induit une dégradation "inutile" des taux d'occupation des liaisons de transmission.

Selon une seconde orientation, le débit ATM n'est pas modifié et les techniques de multiplexage doivent alors prendre en compte le problème posé par le fait que le débit ATM n'est pas multiple des débits de la hiérarchie numérique plésiochrone.

La présente invention vise à fournir une structure de trame et des dispositifs de multiplexage et de récupération de trame pour réseau de distribution dans le cadre de la seconde orientation précitée.

A cette fin, une trame de données multidébit, à transmettre d'une station centrale vers une pluralité de stations terminales et comprenant des secteurs d'usager occupés respectivement par des données destinées à des stations terminales parmi ladite pluralité de stations terminales en communication avec la station centrale et qui ont différents débits qui ne sont pas multiples entre eux, est caractérisée en ce qu'elle a une fréquence sous-multiple d'un plus grand commun diviseur des fréquences associées auxdits différents débits, et en ce que lesdits secteurs d'usager contiennent lesdites données auxdits différents débits en synchronisme avec des signaux d'horloge respectifs ayant des déphasages qui sont périodiquement constants entre eux à une fréquence sous-multiple d'un plus grand commun diviseur des fréquences associées auxdits différents débits.

De préférence, les secteurs sont précédés par un mot de verrouillage de trame et des mots de gestion à un plus petit débit desdits différents débits, et par un signal d'horloge à une fréquence associée à un plus grand débit desdits différent débits.

Plus précisément, le signal d'horloge à une fréquence associée audit plus grand débit occupe au moins deux emplacements respectivement précédant le mot de verrouillage de trame et succédant à celui-ci et chacun ayant au moins une durée d'un élément binaire audit plus petit débit.

L'invention prévoit également un dispositif de multiplexage de données à différents débits non multiples pour former de telles trames à transmettre vers une pluralité de stations terminales, qui est caractérisé en ce qu'il comprend

des moyens de division en fréquence pour diviser en fréquence l'un des signaux d'horloge en synchronisme avec des données à l'un desdits différents débits afin de produire un premier signal d'horloge ayant une fréquence sous-multiple du plus grand commun diviseur des fréquences associées auxdits différents débits,

des moyens d'asservissement pour asservir en phase les autres signaux d'horloge avec ledit premier signal d'horloge,

des moyens pour produire un signal de référence ayant une fréquence de trame qui est sous-multiple d'un plus grand commun diviseur des fréquences associées auxdits différents débits, et

une pluralité de moyens de comptage initialisés par ledit signal de référence et incrémentés respectivement par ledit un des signaux d'horloge et lesdits autres signaux d'horloge asservis, de manière à attribuer sélectivement auxdits secteurs d'usager respectivement des données en synchronisme avec ledit un des signaux d'horloge et lesdits autres signaux d'horloge asservis ayant des déphasages constants entre eux à la fréquence de trame du signal de référence.

Selon un autre objectif de l'invention, un dispositif de récupération de trame destiné à recevoir les trames précitées, est caractérisé en ce qu'il comprend

des moyens de signalisation pour signaler la fin d'un signal d'horloge ayant une fréquence correspondante au plus grand desdits différents débits et inclus dans chaque trame,

des premiers moyens pour détecter une première partie du mot de verrouillage de trame, en réponse à la fin signalée dudit signal d'horloge,

des seconds moyens pour détecter une seconde partie du mot de verrouillage de trame en réponse à la première partie détectée,

un moyen pour asservir en phase un signal d'horloge d'incrémentation à une fréquence correspondante au plus petit débit, par rapport à ladite seconde partie du mot de verrouillage de trame, et

des moyens pour compter des impulsions du signal d'horloge d'incrémentation en réponse à la seconde partie détectée de manière à produire des signaux délimitant des secteurs attribués auxdites stations terminales.

D'autres caractéristiques et avantages de la présente invention apparaîtront plus clairement à la lecture de la description suivante en référence aux dessins annexés correspondants, dans lesquels :

- la figure 1 montre schématiquement des équipements d'extrémité d'un réseau de distribution étoilé à fibre optique;
- les figures 2A et 2B montrent respectivement une trame descendante transmise d'un terminal de ligne optique vers des terminaisons numériques de réseau, et un en-tête de gestion de cette trame;
- la figure 3 est un bloc-diagramme schématique d'un multiplexeur selon l'invention inclus dans le terminal de ligne optique du réseau de la figure 1;
- la figure 4 est un bloc-diagramme détaillé d'un dispositif de synchronisation de secteurs inclus dans le multiplexeur de la figure 3;
- la figure 5 est un bloc-diagramme détaillé d'un dispositif de récupération de trame inclus dans chaque terminaison numérique de réseau de la figure 1;
- la figure 6 montre en détail un circuit de signalisation de fin de premier élément binaire inclus dans le dispositif de récupération de trame; et
- la figure 7 montre en détail un circuit de vérification périodique de mot de verrouillage de trame inclus dans le dispositif de récupération de trame.

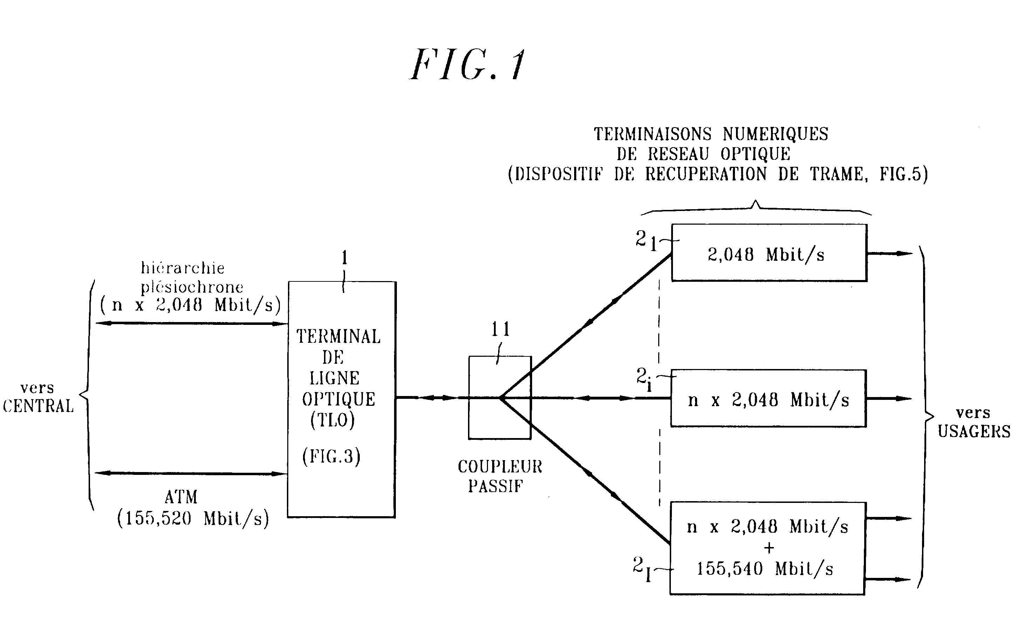

En référence à la figure 1, les équipements d'extrémité de transmission d'un **réseau de distribution étoilé** à fibre optique pour la mise en oeuvre des dispositifs selon l'invention consistent typiquement en un terminal de ligne optique 1 associé à des centraux de commutation des réseaux téléphonique et ATM (non représentés), un coupleur optique passif 11 et I terminaisons numériques de réseau optique $2_1$ à $2_I$. Des données à des débits de la hiérarchie numérique plésiochrone d'une part, et au débit ATM d'autre part, sont respectivement reçues par deux entrées du terminal de ligne optique 1. Ce dernier multiplexe ces données en des trames dans lesquelles coexistent ces différents débits. Le coupleur de fibres optiques possède un premier accès relié au terminal de ligne optique 1 par une fibre optique, et I seconds accès reliés respectivement aux I terminaisons numériques $2_1$ à $2_I$ par I fibres optiques. Les trames produites par le terminal de ligne 1 sont acheminées vers chaque terminaison numérique $2_1$ à $2_I$, à travers le coupleur 11 et via des fibres optiques respectives.

Il est à noter, tout au long de la description qui suit, que les problèmes de synchronisation pour le multiplexage de données à transmettre des terminaisons numériques (usagers) $2_1$ à $2_I$ vers le terminal de ligne (central) 1 ne sont pas considérés. Le procédé retenu pour une telle synchronisation est par exemple celui décrit dans la demande de brevet français FR-A-2 636 482. Ce procédé considère la disparité des temps de propagation des données entre les différentes terminaisons numériques $2_1$ à $2_I$ et le terminal de ligne 1, puisque les distances entre ces terminaisons numériques $2_1$ à $2_I$ et le coupleur optique passif 11 sont différentes.

Ainsi l'invention est dirigée principalement vers des dispositifs pour la mise en oeuvre de trames à données multiplexées de débits non multiples transmises du terminal de ligne 1 vers les terminaisons numériques de réseau $2_1$ à $2_I$.

D'une part, le terminal de ligne 1 comprend des moyens pour multiplexer des données reçues aux débits de la hiérarchie numérique plésiochrone (n x 2,048 Mbit/s), des données reçues au débit ATM (155,520 Mbit/s), et d'autres données d'en-tête de gestion, telles que mot de verrouillage de trame, afin de former des trames à transmettre vers les terminaisons numériques de réseau $2_1$ à $2_I$.

D'autre part, les terminaisons numériques de réseau $2_1$ à $2_I$ incluent chacune des moyens de récupération des trames transmises par le terminal de ligne 1, dont, en outre, un dispositif de récupération de mot de verrouillage de trame.

La description ci-après détaille ainsi des réalisations de multiplexeur pour terminal de ligne 1, et de dispositif de récupération de mot de verrouillage de trame pour terminaison numérique $2_1$ à $2_I$ dans le cadre de la mise en oeuvre d'une trame de données à débits non multiples.

En référence à la figure 2A, une trame de données à débits non multiples selon l'invention comprend un entête de gestion et J secteurs d'usager $S_0$ à $S_{J-1}$. A des fins de simplification de la description, il est supposé que seuls deux débits différents non multiples coexistent dans la trame, savoir le débit ATM à 155,520 Mbit/s et un débit élémentaire de la hiérarchie numérique tel que 2,048 Mbit/s. Pour le multiplexage de données à débits non multiples, la notion essentielle de signal de référence temporelle dans le cadre de l'invention se rapporte à une référence temporelle commune à deux signaux d'horloge $H_{155M}$ à 155 520 kHz et $H_{2M}$ à 2 048 kHz associés respectivement aux deux débits coexistant dans la trame. Un tel signal de référence temporelle a une période qui est multiple des deux périodes respectives des signaux d'horloge $H_{155M}$ et $H_{2M}$. La fréquence du signal de référence temporelle $H_{1K}$ peut par exemple être choisie égale à 1 kHz ou 64 kHz dans la réalisation choisie.

La définition de tels signaux d'horloge ayant des fréquences sous-multiples d'un plus grand commun diviseur des fréquences des signaux d'horloge $H_{155M}$ et $H_{2M}$ associés aux débits de données dans la trame est fondamentale dans le cadre de la présente invention. De tels signaux d'horloge sous-multiple définissent des périodes où les deux signaux d'horloge $H_{155M}$ ET $H_{2M}$ présentent des déphasages constants toutes les périodes de ces dits signaux d'horloge sous-multiple. Une telle mise en phase "périodique" entre $H_{155M}$ et $H_{2M}$ peut être obtenue par asservissement de l'un des deux signaux d'horloge à l'autre. Egalement un tel signal d'horloge sous-multiple peut être utilisé pour initialiser deux compteurs incrémentés par les deux signaux d'horloge $H_{155M}$ et $H_{2M}$. La définition même du signal d'horloge sous-multiple implique que pendant une période d'un tel signal d'horloge sous-multiple, les deux compteurs sont incrémentés par des valeurs respectives multiples entr'elles. Contrairement au procédé décrit dans la EP-A-0 485 260, dans lequel il est implicitement supposé que chaque phase de début de bit d'un premier bit d'un secteur d'usager coïncide avec l'instant de début de ce secteur, la construction d'une trame selon l'invention, dans laquelle tous les débits ne sont pas sous-multiples d'un plus haut débit, implique que chaque phase du premier bit d'un secteur d'usager $S_0$ à $S_{J-1}$ ne coïncide pas nécéssairement avec le début dudit secteur. Ainsi les données d'usager dans un secteur d'usager ne sont pas strictement délimitées par ce secteur mais peuvent être déphasées au maximum d'un élément binaire à ce débit par rapport au début du secteur.

En définissant des signaux d'asservissement ayant une fréquence égale sous-multiple du plus grand commun diviseur des fréquences associées aux différents débits et en asservissant, à l'émission, les différents signaux d'horloge $H_{2M}$ et $H_{155M}$, associés aux différents débits, aux signaux d'asservissement de manière à ce que les signaux d'horloge présentent un déphasage constant toutes les périodes de ces signaux d'asservissement, il est ainsi possible de fournir une phase commune "périodique" pour les deux signaux d'horloge $H_{2M}$ et $H_{155M}$.

En réception, la phase commune périodique pour les deux signaux d'horloge $H_{2M}$ et $H_{155M}$ est récupérée pour établir la coïncidence entre les données d'usager décalées par rapport à un début de secteur et les deux signaux d'horloge de réception asservis associés aux débits des données.

Sur la base de ces critères est défini un signal de référence $H_{1K}$, constituant le signal de fréquence de trame, présentant des déphasages constants respectifs, toutes les périodes du signal de référence, avec des deux signaux d'horloge $H_{155M}$ et $H_{2M}$. Ainsi, une phase de début de trame coïncide systématiquement à des déphasages respectifs constants près, avec les phases des horloges $H_{155M}$ et $H_{2M}$, ce qui fournit l'avantage qu'après remplissage de la trame en émission, la récupération de la trame en réception est réalisée à partir de signaux d'horloge asservis de réception associés aux différents débits ayant tous des phases relatives constantes par rapport à la phase du signal de référence $H_{1K}$ récupéré.

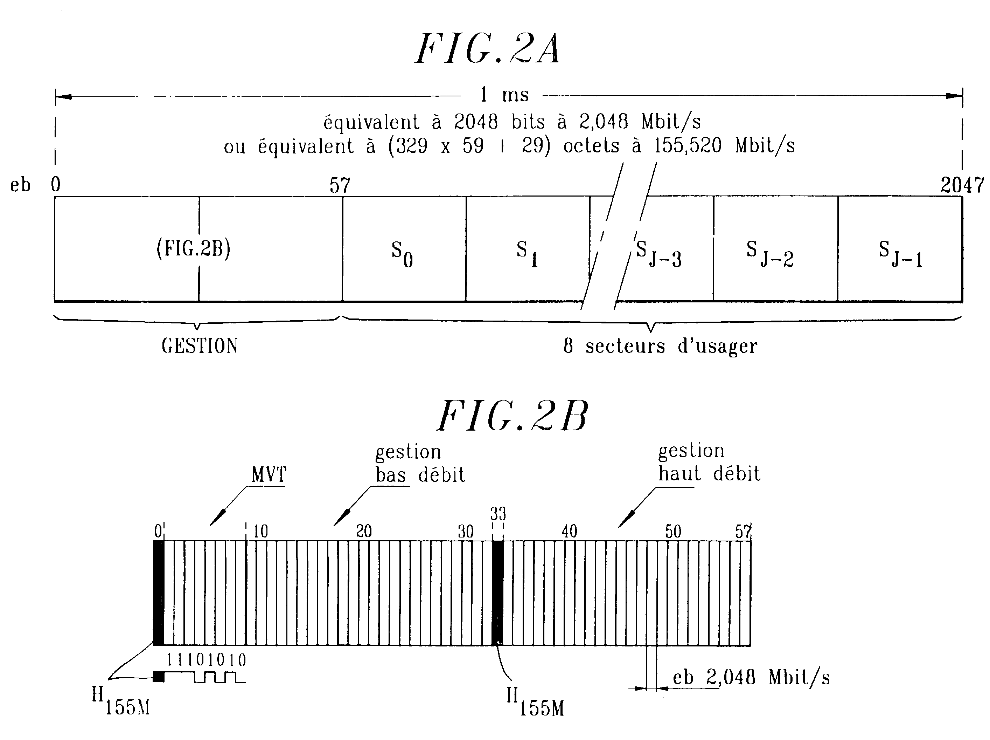

La figure 2B montre en détail la structure de l'entête de gestion de la trame montrée à la figure 2A. Selon la réalisation illustrée, l'en-tête de gestion a une durée égale à 58 périodes du signal d'horloge $H_{2M}$ à 2,048 MHz, également appelées périodes d'élément binaire dans la suite de la description. Suivant l'ordre temporel, l'en-tête de gestion de la trame comprend une première période d'élément binaire occupée par le signal d'horloge haut débit $H_{155M}$, 8 périodes d'élément binaire constituant un mot de verrouillage de trame MVT, 24 périodes d'élément binaire formant un mot de gestion bas débit, une période d'élément binaire au signal d'horloge $H_{155M}$ puis 24 périodes d'élément binaire formant un mot de gestion haut débit. Seules deux périodes d'élément binaire de la trame, savoir les première et trentequatrième, sont occupées par le signal d'horloge haut débit $H_{155M}$, les autres périodes étant occupées par des bits de signal à 2,048 MHz. Le mot de verrouillage de trame MVT est choisi de manière à être inimitable dans les secteurs d'usager et est par exemple égal à "11101010". Les mots de gestion haut et bas débits occupant chacun 24 périodes d'élément binaire sont destinés aux terminaisons numériques de réseau optique $2_1$ à $2_I$ (figure 1) et contiennent des informations de structure de trame relativement aux deux débits coexistant dans les J secteurs d'usager $S_0$ à $S_{J-1}$.

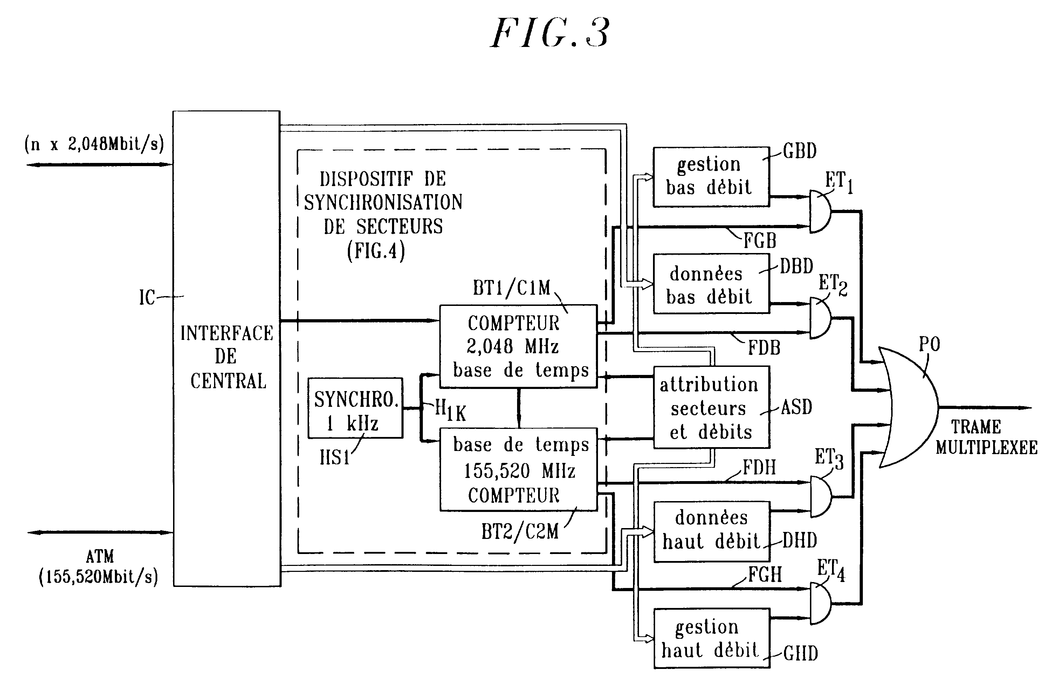

En référence à la figure 3, un multiplexeur pour former des trames telles que présentées ci-dessus et inclus dans le terminal de ligne optique 1 comprend une horloge de synchronisation HS1 produisant le signal de référence temporelle, deux bases de temps BT1 et BT2 produisant deux signaux d'horloge respectifs appliqués à deux entrées d'incrémentation de deux compteurs C1M et C2M, deux mémoires tampons DBD et DHD respectivement pour des données à bas et haut débits, deux mémoires tampons GBD et GHD respectivement pour des mots de gestion à bas et haut débits, un organe de gestion d'attribution de secteurs et débits ASD, quatre portes ET à deux entrées $ET_1$ à $ET_4$ et une porte OU à quatre entrées PO.

Le principe de fonctionnement d'un tel multiplexeur est le suivant.

Des données aux débits de n x 2,048 Mbit/s, avec ici n=1, et 155,520 Mbit/s reçues par le terminal de ligne optique 1 à travers une interface de central IC sont respectivement écrites dans les mémoires tampons DBD et DHD en fonction de signaux d'horloge à 2,048 et 155,520 MHz récupérés dans l'interface IC. L'organe de gestion ASD produit des mots de gestion à haut et bas débits destinés à être intégrés dans l'en-tête de gestion de la trame et qui sont mémorisés temporairement dans les mémoires-tampons GBD et GHD.

Un dispositif de synchronisation de secteurs, détaillé ultérieurement en référence à la figure 4, inclut les fonctions assurées par l'horloge de synchronisation HS1, les deux bases de temps BT1 et BT2 et les deux compteurs C1M et C2M et constitue le module central de ce multiplexeur. Quatre sorties du dispositif de synchronisation sont respectivement reliées à des premières entrées respectives des portes ET1, ET2, ET3 et ET4. Des secondes entrées respectives des portes ET1 à ET4 sont respectivement reliées aux sorties des mémoires GBD, DBD, DHD et GHD. Les quatre premières entrées respectives des portes ET ET1 à ET4 reçoivent respectivement des signaux de fenêtres de validation FGB et FDB, FDH et FGH délimitant des fenêtres temporelles à occuper par les mots de gestion et des données à bas débit et les mots de gestion et des données à haut débit à lire dans les mémoires GBD et DBD, DHD et GHD. Ces signaux de fenêtre de validation valident, en sortie des portes ET ET1 à ET4, des données et mots de gestion à bas et haut débits qui, à travers la porte OU PO, sont multiplexés en une trame telle que celle montrée à la figure 2A. Les liaisons représentées entre l'horloge de synchronisation HS1 et les deux bases de temps BT1 et BT2 sont représentatives de la dépendance temporelle existant, pour les raisons expliquées précédemment, entre des signaux d'horloge produits par ces deux bases de temps BT1 et BT2 et le signal de référence temporelle commune produit par l'horloge de synchronisation HS1.

Dans ce schéma de principe du multiplexeur selon l'invention, il est ainsi matérialisé le fait que les deux bases de temps BT1 et BT2, aux fréquences respectives $H_{2M}$ et $H_{155M}$, sont en phase périodiquement, toutes les périodes du signal de référence temporelle produit par l'horloge de synchronisation HS1, avec ce signal de référence temporelle. Les signaux d'horloge produits par les deux bases de temps BT1 et BT2 incrémentent respectivement les deux compteurs C1M et C2M. L'organe de gestion ASD valide en fonction de la structure de la trame à produire, et notamment de l'affectation des données d'usagers aux différents débits à différents secteurs d'usager, les sorties des compteurs C1M et C2M à travers des logiques de décodage (non représentées). Ces logiques de décodage produisent des fenêtres de validation des données et de gestion haut et bas débits FDH, FGH, FDB, FGB entre des états de comptage donnés de chaque compteur CM1 et CM2. Les sorties de ces deux compteurs C1M et C2M, validées sélectivement par l'organe de gestion ASD, autorisent à travers les portes ET ET1 à ET4 la transmission des données mémorisées dans les mémoires GBD, DBD, DHD et GHD en vue de former chaque trame en fonction de l'organisation dynamique des secteurs de gestion d'usager en dépendance des débits des communications en cours à un instant donné entre le terminal 1 et au plus J des I terminaisons $2_1$ à $2_I$ et de la répartition des débits dans les secteurs.

Le bloc-diagramme de la figure 3 vise à montrer schématiquement que l'invention propose d'utiliser des moyens de gestion ASD validant sélectivement, à travers une logique de décodage, des sorties de compteurs C1M et C2M incrémentées par des signaux d'horloge "en phase" périodiquement avec un signal de référence temporelle produit par l'horloge HS1, en vue de produire des fenêtres de validation de lecture des mots de gestion et données bas et haut débits, l'expression "en phase" étant définie ci-après. Les signaux d'horloge $H_{2M}$ et $H_{155M}$ à 2,048 MHz et 155,520 MHz ne sont pas "constamment" en phase. L'expression "en phase" signifie que périodiquement, à la période du signal de référence temporelle produit par l'horloge de synchronisation HS1, constituant un signal dont la fréquence est sous-multiple d'un plus grand diviseur commun des fréquences des deux signaux d'horloge $H_{2M}$ et $H_{155M}$, le déphasage entre chacun des signaux $H_{2M}$, $H_{155M}$ et le signal de référence temporelle commune $H_{1K}$ est constant. Comme déjà dit, cette fréquence est par exemple choisie égale à la fréquence de trame afin que des déphasages entre les signaux $H_{2M}$ et $H_{155M}$ soient constants toutes les périodes de trame.

La figure 4 montre une réalisation du **dispositif de synchronisation de secteurs à l'émission** montré sous forme schématique à la figure 3. Bien que ce dispositif puisse être réalisé sous la forme d'un circuit logique à composants discrets, comme montré à la figure 4, il peut être également développé au moyen de composants programmables.

Le dispositif comprend une horloge à 1 kHz 10, un circuit de division de fréquence 11, un circuit d'asservissement d'horloge 12, un compteur 13 à bas débit de 2,048 MHz, un circuit d'initialisation 14, un compteur-décompteur 15, un convertisseur de logique ECL-TTL 16, un circuit de génération d'impulsion 17 et un compteur 18 à haut débit de 155,520/8 = 19,440 MHz.

Le circuit de division de fréquence 11 comprend un compteur à $2^4$ états 110, une porte ET à quatre entrées 111, un compteur à $2^7$ états 112, une porte ET à trois entrées 113 et un diviseur de fréquence par deux 114. Un signal d'horloge système $H_{155M}$ établi par l'interface de central IC est appliqué à une entrée d'incrémentation UP du compteur 110 ayant quatre sorties de comptage $S_0$ à $S_3$ reliées à la porte 111 dont la sortie est appliquée à une entrée d'incrémentation UP du compteur 112 et à une entrée de remise à zéro RAZ du compteur 110. Ainsi toutes les quinze périodes d'horloge $H_{155M}$, le compteur 110 est remis à zéro. Les sorties de comptage $S_0$, $S_5$ et $S_7$ de poids 0, 5 et 7 du compteur à $2^7$ états sont reliées à la porte ET 113 dont la sortie est reliée à une entrée de remise à zéro RAZ du compteur 112 qui est ainsi remis à zéro toutes les 81 périodes du signal à la fréquence de 155,520/15 MHz = 10,368 MHz en sortie de la porte 111. A la sortie $S_7$ de la porte 113 est produit un signal d'horloge ayant une fréquence égale à 155,520 MHz/(15 x 81), soit 128 kHz. Ce signal d'horloge à 128 kHz est appliqué à une entrée du diviseur de fréquence par 2 114 constitué de deux portes ET à deux entrées 1141 et 1142, et une bascule RS maître-esclave 1143. La sortie de la porte 113 est connectée à deux premières entrées des portes ET 1141 et 1142 dont des sorties sont reliées aux entrées R et S de la bascule RS 1143. Des sorties Q et $\overline{Q}$ de la bascule RS sont rebouclées sur la bascule par des secondes entrées des portes ET 1141 et 1142. Une entrée d'horloge de la bascule RS reçoit le signal d'horloge produit à la sortie de la porte ET 111. En sortie Q de la bascule RS 1143 est issu un signal d'horloge $H_{64K}$ à 64 kHz, obtenu par division de fréquence par deux de la fréquence du signal d'horloge à 128 kHz. Selon une caractéristique de l'invention, ce signal d'horloge $H_{64K}$ a une fréquence qui est un sous-multiple d'un plus grand commun diviseur des fréquences 155 520 kHz = 2 430 x 64 kHz et 2048 kHz = 32 x 64 kHz associées aux deux débits des données dans la trame.

Ce signal d'horloge $H_{64K}$ est appliqué à une première entrée d'une porte OU-EXCLUSIF 120 dans le circuit d'asservissement d'horloge 12. Entre une seconde entrée et la sortie de la porte OU-EXCLUSIF 120, le circuit 12 comprend une boucle composée successivement d'un circuit d'amplification 121, un oscillateur à phase commandée en tension 122, et deux diviseurs de fréquence 123 et 124. Le signal d'horloge $H_{64K}$, ayant une fréquence sous-multiple d'un plus grand commun diviseur des fréquences d'horloge 155,520 MHz et 2,048 MHz des signaux à multiplexer dans la trame et un autre second signal d'horloge $H'_{64K}$ à 64 kHz, produit par le second diviseur de fréquence 124, sont appliqués à la porte OU-EXCLUSIF 120 qui produit un signal binaire DE. Pendant une période de signal à 64 kHz, l'état du signal DE peut varier entre une limite tout à l'état logique haut "1" à une autre limite tout à l'état logique bas "0" en fonction du déphasage entre les deux signaux $H'_{64K}$ et $H_{64K}$ à 64 kHz. En pratique, le signal DE est tout à l'état haut "1" lorsque les deux signaux d'horloge $H_{64K}$ et $H'_{64K}$ sont déphasés de $\pi$, et tout à l'état bas "0" lorsque ces deux mêmes signaux d'horloge sont en phase. Le signal DE commande, à travers le circuit d'amplification 121, l'oscillateur à phase commandée en tension 122. Cet oscillateur 122 produit un signal à la fréquence de 16,386 MHz, fréquence qui est divisée par 8 et par 32 respectivement par les diviseurs de fréquence en série 123 et 124. La division par 8 x 32 = 256 du signal d'oscillateur produit le signal d'horloge $H'_{64K}$, et la division par 8 permet d'obtenir un signal d'horloge $H_{2M}$ à la fréquence de 2,048 MHz associée à l'un des débits de secteur dans la trame. La commande de l'oscillateur 122 par un signal produit à la sortie du circuit d'amplification de boucle 122 asservit la phase du signal d'horloge $H'_{64K}$ à la phase du signal d'horloge $H_{64K}$ issu du circuit de division en fréquence 11.

Le signal $H_{64K}$ est obtenu par division en fréquence du signal d'horloge à haut débit $H_{155M}$ reçu de l'interface de central. Ces deux signaux $H_{64K}$ et $H_{155M}$ sont donc en "phase périodiquement". Par ailleurs, les signaux $H_{2M}$ et $H'_{64K}$ obtenus respectivement en sortie des deux diviseurs de fréquence 123 et 124 sont également périodiquement en phase. Le signal d'horloge $H'_{64K}$ étant asservi à l'autre signal $H_{64K}$ de manière à être en phase, le signal d'horloge $H_{2M}$ est également asservi au signal $H_{155M}$. Un tel asservissement évite un glissement de phase au cours du temps entre les deux signaux d'horloge $H_{155M}$ et $H_{2M}$ constituant les signaux d'horloge à haut débit et bas débit de la trame. Le signal d'horloge à bas débit $H_{2M}$ est appliqué à une entrée d'incrémentation UP du compteur 13.

Dans le cadre d'un multiplexeur selon l'invention montré sous forme schématique à la figure 3, l'organe de gestion d'attribution des secteurs ASD coopère avec des compteurs C1M et C2M qui sont repérés par 13 et 18 dans la figure 4, et qui sont incrémentés par des signaux d'horloge à 2,048 MHz et 155,520 MHz asservis. L'asservissement du signal d'horloge à bas débit $H_{2M}$ au signal d'horloge à haut débit $H_{155M}$ rend possible la définition d'une "phase commune" aux deux signaux d'horloge $H_{2M}$ et $H_{155M}$; les compteurs 13 et 18 sont validés par l'organe de gestion ASD pour le remplissage, pour chaque fenêtre temporelle produite, à travers des logiques de décodage (non représentées) associées aux compteurs 13 et 18, d'éléments binaires aux deux débits dans la trame. Ces deux compteurs sont initialisés simultanément à chaque instant de début d'une trame afin d'obtenir une référence d'horloge de comptage commune aux deux débits.

En revenant à la figure 4, l'initialisation simultanée des deux compteurs 13 et 18 est réalisée de la manière suivante.

Le signal d'horloge asservi à bas-débit $H_{2M}$ est appliqué à une entrée de comptage UP du compteur bas-débit 13, dont une entrée de remise à zéro RAZ reçoit le signal d'horloge de référence temporelle commune à la fréquence de 1 kHz, constituant la fréquence de trame. Les sorties de comptage du compteur 13 sont au nombre de 11, $E_0$ à $E_{10}$. Après réinitialisation par mise à zéro du compteur bas-débit 13, le premier bit issu de la sortie de comptage $E_0$ de bit de poids le plus faible est produit en réponse à la première impulsion du signal $H_{2M}$, et appliqué à une entrée du circuit d'initialisation 14.

Le circuit d'initialisation comprend un inverseur 140, deux bascules de type D 141 et 142, une porte OU à deux entrées 143 et un inverseur 144. Les sorties Q et $\overline{Q}$ respectives des deux bascules 141 et 142 sont reliées aux deux entrées de la porte OU 143 dont la sortie est appliquée à des entrées de commande $C_1$ et $C_2$ du compteur-décompteur 15, respectivement directement et à travers l'inverseur 144. La sortie $\overline{Q}$ de la première bascule D 141 est reliée à l'entrée D de la seconde bascule 142. Les deux bascules reçoivent à des entrées d'horloge le signal d'horloge à haut débit $H_{155M}$ transmis par l'interface de central IC.

En réponse à deux impulsions d'horloge dans le signal $H_{155M}$ succédant au front descendant du premier bit produit après initialisation à la sortie du compteur 13 à travers l'inverseur 140, deux impulsions brèves de durée égale à la période du signal d'horloge à haut débit $H_{155M}$ et de niveaux bas "0" et haut "1" sont respectivement produites aux sorties de la porte OU 143 et de l'inverseur 144. Ces deux impulsions initialisent le compteur-décompteur 15 en mode compteur. Ce compteur-décompteur 15 est un composant connu sous la nomenclature ECL-F 100 136, réalisé en technologie ECL offrant une vitesse élevée de transfert. Le compteur-décompteur 15 reçoit à une entrée d'horloge le signal à haut débit $H_{155M}$. A des troisièmes sorties directe et inverse $Q_2$ et $\overline{Q}_2$ dans le sens des bits croissants de comptage du compteur-décompteur 15 sont issus des signal d'horloge et signal d'horloge inversé ayant une fréquence huit fois moindre que la fréquence du signal à haut débit $H_{155M}$, soit 19,440 MHz. Le compteur-décompteur 15 étant réalisé en technologie ECL, les signaux produits en sortie du compteur-décompteur 15 sont convertis selon une logique compatible avec le reste du dispositif, à travers le convertisseur ECL-TTL 16. La sortie du convertisseur 16 délivre un signal d'horloge $H_{19M}$ compatible avec la logique TTL et dont la fréquence obtenue par division par 8 dans le compteur-décompteur 15 est égale à 19,440 MHz. Cette fréquence correspond à la fréquence d'octet du débit ATM à 155,520 MHz. Ce signal d'horloge d'octet à haut débit $H_{19M}$ est utilisé pour incrémenter le compteur haut-débit 18.

Ainsi les deux premières impulsions d'horloge respectives incrémentant les deux compteurs 13 et 18 sont quasi-simultanées à l'instant d'un début de trame délimitée par le signal de référence temporelle commune $H_{1K}$ produit par l'horloge 10.

Il est rappelé qu'il est nécessaire d'initialiser simultanément les deux compteurs 13 et 18 afin que les moyens de gestion et d'attribution ASD du multiplexeur selon l'invention disposent d'une référence de comptage d'éléments binaires pour le remplissage de la trame. C'est le rôle du circuit de génération d'impulsion 17. Ce dernier comprend deux bascules de type D 171 et 172 et une porte ET à deux entrées 173. Une sortie $\overline{Q}$ de la bascule 171 et une sortie Q de la bascule 172 sont respectivement reliées aux entrées de la porte ET 173 dont une sortie est connectée à une entrée de remise à zéro RAZ du compteur haut-débit 18. Une sortie Q de la bascule 171 est appliquée à une entrée D de la bascule 172. Le signal d'horloge $H_{19M}$ d'incrémentation du compteur haut-débit 18 produit en sortie du convertisseur ECL-TTL 16 est appliqué aux entrées d'horloge des bascules 171 et 172. Le fonctionnement du circuit de génération d'impulsion 17 est le suivant. Le premier bit, issu de la sortie de comptage $E_O$ du compteur bas-débit 13 après réinitialisation de ce dernier par l'horloge à 1 kHz 10, est appliqué à l'entrée D de la bascule 171. Après échantillonnage par les deux bascules 171 et 172, une impulsion sortant de la porte ET 137 est appliquée à l'entrée RAZ du compteur 18 et réinitialise celui-ci.

Il a été décrit jusqu'à présent, un dispositif de synchronisation de secteurs à l'émission implanté dans un multiplexeur selon l'invention destiné à être intégré dans le terminal de ligne optique 1. Ce dispositif a, en outre, pour fonction d'initialiser simultanément des compteurs bas-débit et haut-débit 13 et 18 et de débuter l'incrémentation de ces deux compteurs par deux premières impulsions respectives ayant des fronts montants en phase. La simultanéité d'"initialisation" de ces deux compteurs 13 et 18 permet ainsi des incrémentations de ces deux compteurs 13 et 18 par les deux bases de temps respectives en vue de produire des fenêtres pour secteurs de gestion et d'usager qui soient synchronisées par rapport au début de la trame afin d'effectuer les opérations de remplissage et lecture de mémoire relatives aux différents secteurs de la trame aux deux débits, 155,520 Mbit/s et 2,048 Mbit/s, par rapport à une phase commune de début de trame.

Il est maintenant décrit **un dispositif de récupération de trame** destiné à être intégré dans chacune des terminaisons numériques de réseau optique $2_1$ à $2_I$ (figure 1). Le terminal de ligne 1 émet des trames à débits non multiples dont les secteurs $S_0$ à $S_{J-1}$ sont destinés respectivement à au plus J terminaisons en communication $2_1$ à $2_I$. Chaque terminaison $2_1$ à $2_I$ récupère le mot de verrouillage de trame MVT afin de déduire des fenêtres respectives de récupération de données aux débits de 155,520 Mbit/s et 2,048 Mbit/s.

En référence aux figures 2A et 2B, J=8 secteurs d'usager $S_0$ à $S_8$ sont prévus à titre d'exemple dans chaque trame. Les secteurs d'usager aux débits respectifs de 155,520 Mbit/s et 2,048 Mbit/s sont contigus et l'attribution de l'un de ces débits à un secteur d'usager ayant un emplacement donné dans la trame est fonction du débit supporté par la terminaison correspondante. Ainsi un secteur d'usager peut comprendre à un instant donné environ 248 bits au débit de 2,048 Mbit/s, soit 320 cellules ATM à 59 octets et donc 320 x 59 bits au débit de 155,520 Mbit/s. Chaque trame de durée égale à 1 ms correspond ainsi à la durée de transmission de 2048 éléments binaires à 2,048 Mbit/s, ou 2048 impulsions d'horloge consécutives à 2,048 MHz. Le mot de verrouillage de trame est pris égal à "11101010".

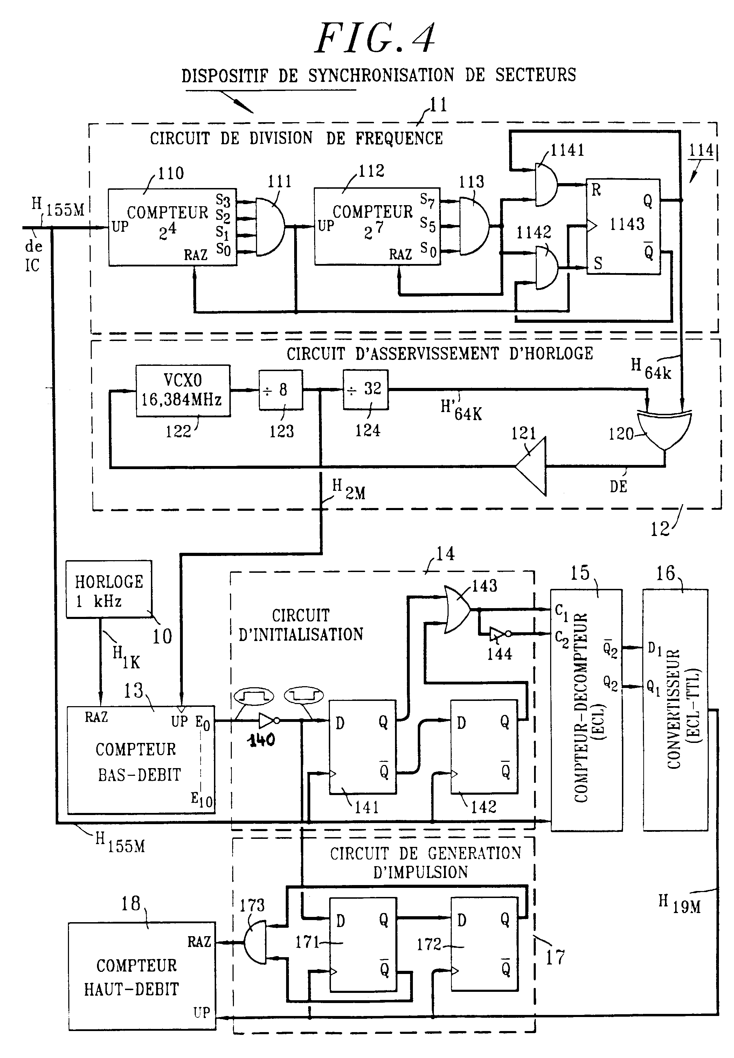

En référence à la figure 5, un **dispositif de récupération de trame** destiné à être inclus dans chaque terminaison numérique $2_1$ à $2_I$ comprend une horloge à 19,440 MHz 20, un circuit de signalisation de fin de premier élément binaire 21, une boucle de phase 22 à 2,048 MHz, un circuit d'identification de mot de verrouillage de trame 23, un circuit logique de comptage 24 contenant un compteur à $2^{11}$ états, un circuit d'initialisation et de surveillance 25, un circuit de vérification périodique de mot de verrouillage de trame 26, un circuit de reprise d'identification de mot de verrouillage de trame 27 et un circuit de génération d'enveloppe 28.

Chaque trame transmise par le terminal de ligne optique 1 est appliquée, en outre, dans la terminaison numérique, à des entrées du circuit de signalisation 21 et du circuit de vérification périodique de mot de verrouillage de trame 26. Comme il sera décrit ci-après, le circuit de vérification périodique de mot de verrouillage de trame 26 a pour fonction de détecter que le mot de verrouillage de trame MVT inclus dans chaque trame est correctement reçu. Dans le cas où une perte de mot de verrouillage de trame est détectée par le circuit 26, celui-ci produit un état "1" à une première entrée d'une porte ET à deux entrées 286 du circuit de génération d'enveloppe 28. Une seconde entrée de cette porte ET 286 reçoit le signal de trame TRAME. A travers une porte OU à trois entrées $287_a$ du circuit 28, la sortie de la porte ET 286 est appliquée à une entrée de la boucle de phase 22. Ainsi toute la trame est appliquée à l'entrée de la boucle de phase 22 si il y a perte de verrouillage de trame, c'est-à-dire si le mot de verrouillage de trame n'a pas été reconnu ou a été perdu. Si le circuit 26 ne détecte pas une perte de mot de verrouillage de trame, alors le signal de trame TRAME n'est pas validé en sortie de la porte ET 286, et seuls les secteurs de la trame à 2,048 MHz sont appliqués en entrée de la boucle de phase. Cette dernière, asservie aux éléments binaires à 2,048 MHz de la trame, produit un signal d'horloge à 2,048 MHz pour incrémenter le circuit logique de comptage 24. Un oscillateur dans la boucle de phase 22 est asservi à la phase des éléments binaires à 2,048 Mbit/s dans la trame grâce aux cinq derniers bits "01010" alternants du mot de verrouillage de trame MVT au début de trame. Comme montré à la figure 6, le circuit de signalisation de fin de premier élément binaire 21 comprend deux bascules de type D 210 et 211, une première porte ET à deux entrées 212, un inverseur 213 et une seconde porte ET à deux entrées 214.

Un signal d'horloge à 19,440 MHz $H_{19M}$ produit par l'horloge 20 est appliqué aux deux entrées de la porte ET 214 respectivement directement et à travers l'inverseur 213. L'inverseur 213 et la porte ET 214 constituent un "moyen de génération d'impulsion brève"; l'impulsion brève a une durée égale au temps de réponse de l'inverseur 213 et donc au retard induit par celui-ci. Le signal d'horloge à 19,440 MHz $H_{19M}$ peut par exemple être obtenu à partir d'une boucle de phase qui est utilisée en sortie du circuit de génération d'enveloppe 28 pour récupérer les éléments binaires à 155,520 MHz dans la trame. Ce signal d'horloge $H1_{9M}$, qui est alors non asservi dans une phase préliminaire de récupération de trame, présente une dérive de phase par rapport aux éléments binaires de la trame. Ceci explique pourquoi, comme mentionné dans la suite de la description, des comptages d'impulsions du signal d'horloge $H_{19M}$ durant des intervalles temporels donnés du mot de verrouillage de trame pour la reconnaissance du mot de verrouillage de trame sont effectués en ne retenant pas les valeurs de comptage théoriques correspondantes au cas où les phases de différents signaux coïncident.

La sortie de la porte ET 214 est appliquée à deux entrées de réinitialisation R des bascules D 210 et 211, et à l'état haut "1", force les sorties Q des bascules 210 et 211 au niveau bas "0". Les sorties $\overline{Q}$ des deux bascules 210 et 211 sont, d'une part, rebouclées sur les entrées respectives D des deux bascules 210 et 211 et, d'autre part, appliquées aux deux entrées de la porte ET 212. Le signal de trame est fourni à une entrée d'horloge de la bascule 210, tandis que la bascule 211 reçoit en entrée d'horloge la sortie Q de la bascule 210. A la fréquence du signal $H_{19M}$, une impulsion brève est produite à la sortie de la porte ET 214 qui force les sorties $\overline{Q}$ des deux bascules D 210 et 211, et donc la sortie de la porte ET 212, à l'état "1". Cet état "1" en sortie de la porte 212 est maintenu jusqu'à un prochain front montant dans le signal d'horloge $H_{155M}$ occupant le premier élément binaire de la trame. En pratique, en référence à la figure 2B, un tel circuit de signalisation 21 fournit une impulsion IMP précédant temporellement la fin du premier élément binaire de début de trame d'au maximum 8 périodes du signal d'horloge à 155,540 MHz. Le circuit logique de comptage 24 compte 2048 périodes successives à 2,048 MHz pendant la période de trame, et fournit, en outre, des fenêtres temporelles respectives aux deux débits des secteurs d'usager dans la trame.

Lors d'une initialisation générale du dispositif de récupération de trame, un signal de remise à zéro par mise sous tension RAZMT met à zéro le compteur dans le circuit de comptage 24 tout en forçant la sortie de comptage de poids le plus faible ($E_0$ pour état zéro) à "1". Cet état "1" est appliqué, d'une part, à une première entrée d'une porte ET à deux entrées $252_a$ dont une seconde entrée reçoit le signal d'impulsion IMP produit par le circuit de signalisation 21 et, d'autre part, à une entrée de données D d'une bascule de type D $253_a$, la porte ET $252_a$ et la bascule D $253_a$ faisant partie du circuit 25. Pour chaque impulsion produite par le circuit de signalisation 21, la bascule D $253_a$ produit en sortie Q un état "1" qui est appliqué à une première entrée d'une porte ET à trois entrées 234. Une seconde entrée de la porte ET 234 reçoit la sortie $\overline{Q}$ d'une bascule de type D 270 forcée à l'état haut "1" par le signal de remise à zéro par mise sous tension RAZMT appliqué à une entrée de réinitialisation R de ladite bascule 270. Une troisième entrée de la porte ET 234 est reliée à la sortie d'une porte OU 232 qui a deux entrées 232 recevant le signal d'impulsion IMP produit par le circuit 21, et le signal de trame à travers un moyen de génération d'impulsion brève 230. Un compteur à $2^8$ états $235_a$, dont une entrée de réinitialisation R est connectée à une sortie de la porte ET 234, est réinitialisé pour chaque front montant du signal de trame ou du signal d'impulsion IMP, et notamment une fois en fin du premier élément binaire suite à une impulsion IMP produite par le circuit 21.

Les trois premiers bits du mot de verrouillage de trame sont "111". Le compteur à $2^8$ états $235_a$ réinitialisé par des fronts montants du signal de trame ou du signal d'impulsion IMP reçoit par une entrée d'horloge de comptage le signal d'horloge à 19,440 MHz $H_{19M}$. Durant les trois premiers bits "111" du mot de verrouillage de trame, le compteur est incrémenté de 25. L'état 25 en sortie $E_{25}$ du compteur $235_a$ est appliqué, à travers une porte ET à deux entrées 271, à l'entrée de données de la bascule D 270. Une seconde entrée de la porte ET 271 reçoit le signal de trame qui est à l'état haut "1", en correspondance avec les trois premiers bits à "1" du mot de verrouillage de trame MVT. L'entrée D de la bascule 270 est figée à l'état "1". La sortie $\overline{Q}$ de la bascule 270 est à l'état "0" dès l'état 25 du compteur $235_a$, ce qui ferme la porte ET 234 et donc bloque la réinitialisation du compteur $235_a$. Préalablement à cet état 25 en sortie $E_{25}$ du compteur $235_a$, l'état de comptage 24 en sortie $E_{24}$ du compteur $235_a$ est appliqué à une entrée de réinitialisation d'un compteur à $2^3$ états $235_b$ à travers une première entrée d'une porte ET 236 dont une seconde entrée reçoit le signal de trame positionné alors au niveau "1", en correspondance avec un intervalle temporel final du troisième bit à l'état "1" du mot de verrouillage de trame MVT. Le compteur $235_b$, ainsi réinitialisé durant un intervalle temporel final du troisième bit du mot de verrouillage de trame MVT, reçoit sur une entrée d'horloge de comptage un signal de comptage de transition $S_c$. Ce signal de comptage de transition est produit par une porte OU 233 ayant deux entrées reliées respectivement aux sorties de la porte OU 232 et d'un moyen de génération d'impulsion brève 231 connecté à la sortie de l'inverseur dans le moyen de génération d'impulsion brève 230. Le signal de comptage de transition $S_C$ consiste donc en des impulsions brèves en réponse à des fronts montants et descendants du signal de trame, en l'occurrence en réponse aux fronts montants et descendants des 5 derniers bits "01010" du mot de verrouillage de trame MVT. Une porte ET à trois entrées 237 valide des conditions de reconnaissance du mot de verrouillage de trame, en vérifiant que l'ensemble des conditions suivantes de reconnaissance du mot MVT soit satisfait, savoir :

(a) - comptage de 25 impulsions d'horloge $H_{19M}$ (au lieu de 28 pour prendre en compte la dérive de l'horloge $H_{19M}$) alors que trois éléments binaires consécutifs sont à l'état "1", suivi d'une
(b) - détection de 5 transitions du signal de trame, et
(c) présence d'un état bas "0" (dernier bit du MVT).

La porte ET 237 reçoit pour cela sur trois entrées respectivement :

(a) une sortie d'état 70 $E_{70}$ du compteur $235_a$, coïncidant avec la présence de l'état bas "0" du mot MVT (si aucune dérive n'existait dans le signal d'horloge $H_{19M}$, 73 et non 70 coups d'horloge devraient être comptés puisque 8 éléments binaires à 2,048 Mbit/s correspondent à 73 coups d'horloge $H_{19M}$ à 19,440 MHz);
(b) la sortie d'état 5 $E_5$ du compteur $235_b$; et
(c) le signal de trame à travers un inverseur INV.

La sortie de la porte ET 237 est à un état haut "1" lorsque les trois conditions précitées (a), (b) et (c) sont vérifiées. La sortie de cette porte ET 237 est appliquée, d'une part, à une entrée d'horloge d'une bascule de type D 238 et, d'autre part, à une entrée d'horloge d'une bascule de type D $250_b$ à travers une première entrée d'une porte ET à deux entrées $252_b$. Ces deux bascules 238 et $250_b$ ont leur entrée de données D figé à l'état haut "1". Une seconde entrée de la porte ET $252_b$ est connectée à une sortie complémentaire $\overline{Q}$ de la bascule 238. Lorsque l'ensemble des conditions de reconnaissance du mot MVT est validé ce qui amène la sortie de la porte ET 237 à l'état "1", une impulsion brève, de durée égale au retard induit par la bascule 238, est appliquée à l'entrée d'horloge de la bascule $250_b$. Il est à noter que la bascule 238 reçoit, lors de la mise sous tension du dispositif de récupération de trame, le signal RAZMT à une entrée de réinitialisation R à travers une porte OU à trois entrées 239, positionnant la sortie Q de la bascule 238 à l'état "0". La sortie Q de la bascule 238, positionnée à "1" si les conditions de reconnaissance du MVT sont vérifiées, est reliée à une première entrée d'une porte ET à deux entrées 241 dont une seconde entrée reçoit le signal produit par la boucle de phase 22, signal asservi au signal de trame au débit de 2,048 Mbit/s au moyen des cinq derniers bits du MVT. Lors du positionnement à "1" de la sortie de la porte ET 237, simultanément la sortie Q de la bascule $250_b$ reliée à une entrée de mise à 8 (M8) du circuit de comptage 24 met le contenu du circuit de comptage 24 à 8, et la porte ET 241 est ouverte afin que le signal d'horloge asservi produit par la boucle de phase 22 soit appliqué en entrée d'horloge du circuit de comptage 24 et incrémente celui-ci. La mise à 8 du circuit de comptage 24 correspond aux (1 + 7) éléments binaires à 2,048 MHz de la trame respectivement occupés par l'horloge à 155,520 MHz et par les sept premiers bits du mot MVT; le dernier bit du mot MVT n'est pas pris en compte lors du comptage de transitions pour la reconnaissance du mot MVT, et seules cinq transitions montantes et descendantes sont comptées (Figure 2B). Le circuit de comptage 24 est incrémenté en "phase" avec les bits du mot MVT par le signal de l'oscillateur asservi de la boucle de phase 22.

Il est également prévu dans le dispositif de récupération de trame de vérifier la présence effective du signal d'horloge à 155,520 MHz dans l'élément binaire 33 de la trame (Figure 2B).

Pour cela, la sortie d'état 33 $E_{33}$ du circuit de comptage 24 est appliquée à une première entrée d'une porte ET à deux entrées $251_a$ dont une seconde entrée reçoit le signal d'impulsion IMP produit par le circuit de signalisation 21. Une sortie de la porte ET $251_a$ est reliée à une entrée d'horloge d'une bascule de type D $250_a$. La bascule $250_a$ a son entrée de données D reliée à une sortie d'une porte ET $255_a$ ayant deux entrées reliées à la sortie $E_{33}$ du circuit de comptage 24 et à une sortie d'une porte ET $254_a$. Deux entrées de la porte $254_a$ sont reliées aux sorties Q des bascules $253_a$ et 238 respectivement. Comme déjà précisé, la sortie Q de la bascule 238 est positionnée à l'état "1" après reconnaissance du mot de verrouillage de trame MVT. Pour sa part, la sortie Q de la bascule $253_a$ est mise à "1" en réponse à un front montant ou un front descendant du signal de trame lorsque la sortie d'état $E_0$ du circuit de comptage 24 est à "1". Ainsi la sortie de la porte ET $254_a$ est à "1" en réponse à l'état $E_O$ en sortie du circuit de comptage 24 et à la reconnaissance du mot de verrouillage de trame, lorsque la trame reçue est correctement calée dans le temps. La sortie de la porte ET $255_a$ est également positionnée à "1" lors du $33^{ième}$ élément binaire de la trame puisque ses entrées sont reliées à la sortie de la porte ET $254_a$ et à la sortie d'état $E_{33}$ du circuit de comptage 24. L'entrée d'horloge de la bascule $250_a$ reçoit, via la porte ouverte $251_a$ et pendant la durée du $33^{ième}$ élément binaire, le signal d'impulsion IMP produit par le circuit 21.

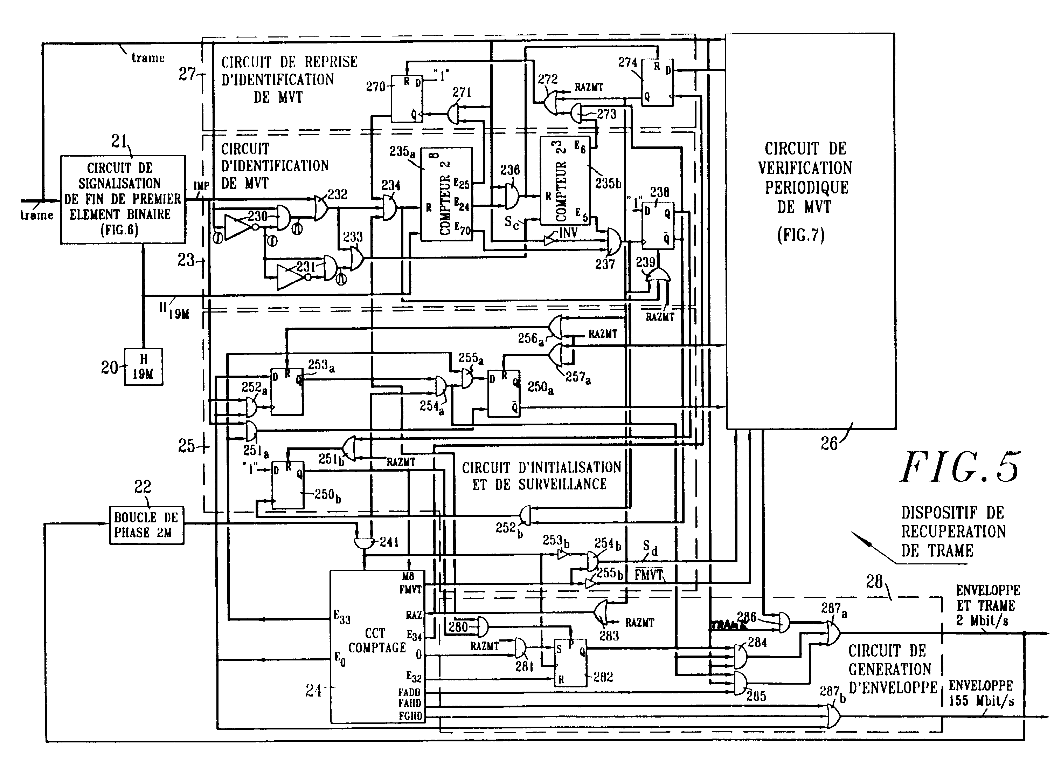

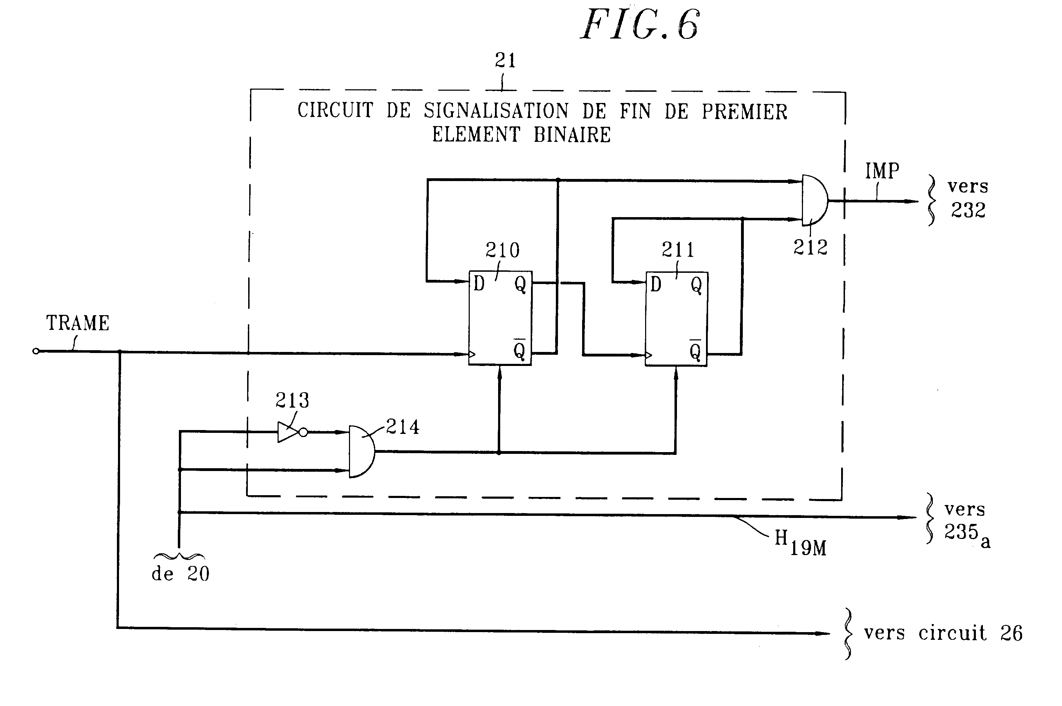

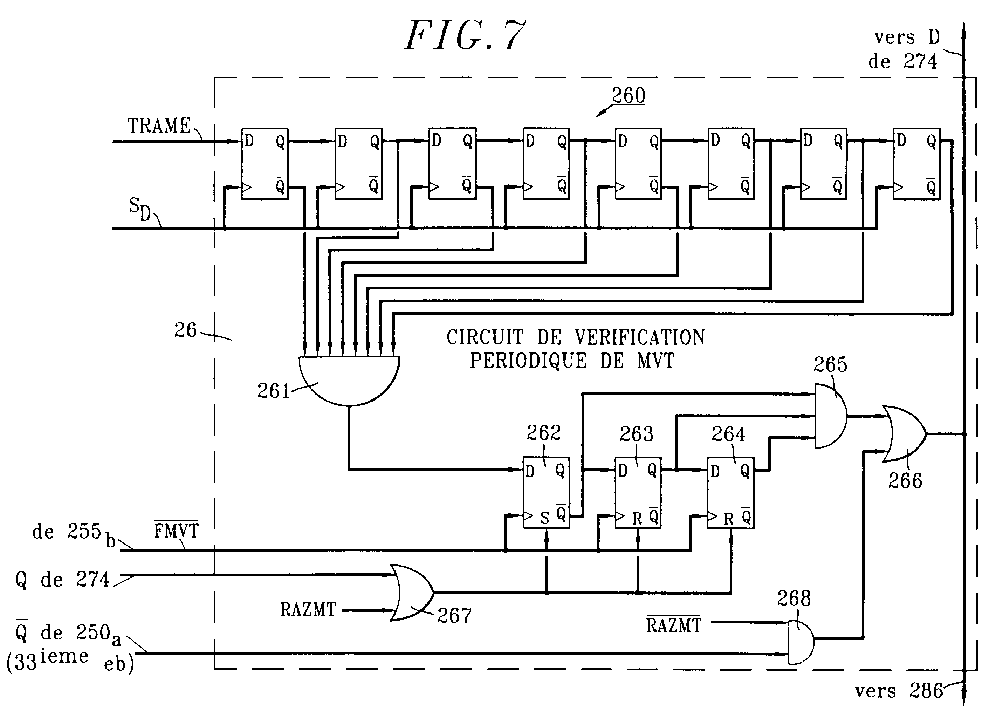

Ainsi l'état "1", appliqué à l'entrée de données D de la bascule $250_a$, n'est validé en sortie Q de cette bascule $250_a$ que si au moins une transition de niveau apparaît dans le signal de trame pendant la durée du $33^{ième}$ élément binaire à 2,048 Mbit/s, et donc si un signal de fréquence supérieure, en l'occurence le signal d'horloge $H_{155M}$, est fourni pendant cette durée. La sortie $\overline{Q}$ de la bascule $250_a$, initialisée à l'état "0" par le signal de remise à zéro par mise sous tension RAZMT, reste donc positionné à "0" si le $33^{ième}$ élément de la trame est occupé de manière prédéterminée par le signal d'horloge à haute fréquence $H_{155M}$. Un état "1" à la sortie de la bascule $250_a$, qui est reliée à une première entrée d'une porte OU 266 à travers une porte ET 268 dans le circuit 26 (figure 7), traduit une perte de verrouillage de trame ce qui conduit à une procédure de reprise d'identification de mot de verrouillage de trame.

Les circuits 26 et 27 accomplissant cette procédure de reprise d'identification de mot de verrouillage de trame sont maintenant détaillés.

Le circuit de vérification périodique de MVT 26 montré à la figure 7 comprend un registre à décalage 260 constitué de 8 bascules de type D connectées en cascade, une porte ET à 8 entrées 261, trois bascules de type D 262, 263 et 264, une porte ET à trois entrées 265, deux portes OU à deux entrées 266 et 267 et une porte ET à deux entrées 268. Une entrée de données D du registre à décalage 260 reçoit le signal de trame.

Une entrée d'horloge de ce registre à décalage 260 reçoit un signal d'horloge de décalage $S_D$ produit en sortie d'une porte ET $254_b$. Une première entrée de cette porte ET $254_b$ reçoit, à travers un inverseur $253_b$, le signal d'horloge produit en sortie de la porte 241, tandis qu'une seconde entrée de la porte $254_b$ reçoit un signal de fenêtre de mot de verrouillage de trame FMVT.

Le signal de fenêtre de mot de verrouillage de trame FMVT est produit à l'état "1" par le circuit logique de comptage 24 uniquement lorsque le contenu du compteur dans le circuit 24 est compris dans l'intervalle prédéterminée [2,9] délimitant temporellement l'emplacement correct du mot MVT dans la trame. Le signal de fenêtre FMVT ouvre la porte ET $254_b$ durant l'intervalle temporel "prédéterminé" du mot de verrouillage de trame, afin d'appliquer le signal complémentaire au signal d'horloge produit par la boucle de phase 22 à l'entrée d'horloge du registre 260. Des sorties $\overline{Q}$, Q, $\overline{Q}$, Q, $\overline{Q}$, Q, Q et Q respectives de la première à la huitième bascule dans le registre à décalage 260 correspondent respectivement aux poids des huits bits du mot MVT = "11101010" en commençant par le bit de poids faible "0", et sont appliquées aux huit entrées de la porte ET 261. Un état "1" est produit en sortie de cette porte ET si un mot à huit bits dans la trame est identique au mot de verrouillage de trame et occupe ledit intervalle de temps "prédéterminé". La sortie $\overline{Q}$ de la bascule 262 est reliée à l'entrée de données D de la bascule 263, et la sortie Q de la bascule 263 est connectée à l'entrée D de la bascule 264. Les sorties respectives $\overline{Q}$, Q et Q des bascules 262, 263 et 264 sont appliquées aux trois entrées de la porte ET 265 dont la sortie est reliée à une seconde entrée de la porte OU 266. Ces trois bascules 262 à 264 reçoivent en entrée d'horloge, un signal de fenêtre complémentaire au signal FMVT à travers un inverseur $255_b$.

Le fonctionnement des circuits 26 et 27 est le suivant. Le signal d'horloge à 2,048 MHz validé durant la fenêtre de mot de verrouillage de trame en sortie de la porte ET $254_b$ permet d'enregistrer dans le registre à décalage 260 des données de la trame reçues pendant cette fenêtre.

Si les données de la trame durant cette fenêtre temporelle correspondent au mot de verrouillage de trame MVT, la sortie de la porte ET 261 passe à l'état "1". Tant qu'un mot de verrouillage correct est signalé par l'état "1" en sortie de la porte 261, au moins la sortie $\overline{Q}$ de la bascule 262 parmi les trois bascules 262 à 264 demeure à l'état "0" en réponse à la fin de chaque signal de fenêtre FMVT et la sortie de la porte 265 reste à l'état "0".

Dans le cas contraire, un état "0" est produit en sortie de la porte ET 261 et donc sur l'entrée de données D de la bascule 262. A la fin de la fenêtre de mot de verrouillage de trame FMVT, un front montant, fourni en sortie de l'inverseur $255_b$, déclenche, en sortie $\overline{Q}$ de la bascule 262, la mémorisation d'un état "1" en correspondance avec l'état "0" appliqué à l'entrée D de la bascule 262. La sortie de la porte ET 265 est ainsi à l'état "1" lorsque les sorties $\overline{Q}$, Q et Q des bascules 262, 263 et 264 sont toutes à l'état "1", c'est-à-dire lorsque la sortie de la porte ET 261 est demeurée à l'état "0" pendant trois trames successives et ainsi les trois bascules 262, 263 et 264 ont détecté trois pertes de mot de verrouillage de trame successives. Par contre si une trame ou deux trames successives contiennent un mot de verrouillage incorrect, la sortie de la porte 265 reste à l'état "0".

En résumé, en sortie de la porte OU 266, un état haut "1" est fourni si au moins l'une des deux conditions suivantes est vérifiée :

(a) - détection de pertes de mot de verrouillage de trame dans trois trames successives; et
(b) - inoccupation du $33^{\text{ième}}$ élément dans une trame par le signal d'horloge à 155,520 MHz, signalée par l'état "1" en sortie $\overline{Q}$ de la bascule $250_a$, via la porte 268.

En référence à nouveau à la figure 5, la sortie de la porte OU 266 est appliquée à une entrée de données d'une bascule de type D 274. L'entrée d'horloge de cette bascule D reçoit un signal d'état de comptage 34 $E_{34}$ fournit par le circuit logique de comptage 24. Lorsque l'une des deux conditions précitées est vérifiée, un état haut "1" est fourni en sortie Q de la bascule 274 en réponse au front montant de l'état de comptage $E_{34}$ et est appliqué à travers la porte OU 272 à l'entrée de réinitialisation R de la bascule 270, forçant la sortie $\overline{Q}$ de cette bascule à l'état "1". Une reprise d'identification du mot de verrouillage de trame est alors initialisée.

Les composants logiques inclus dans le circuit de génération d'enveloppe 28 et agencés comme montré à la figure 5, notamment une bascule RS 282, trois portes ET 284, 285 et 286 et deux portes OU $287_a$ et $287_b$, sont destinés à générer des enveloppes des données à 2,048 Mbit/s et 155,54 Mbit/s. Ces enveloppes déterminent des intervalles temporels respectifs de la trame dans lesquels sont transmis les données aux deux débits. Le circuit de comptage 24 est programmé dynamiquement en fonction des secteurs d'abonnés $S_0$ à $S_{J-1}$ auxquels sont assignés les deux débits respectifs. Ainsi, notamment la sortie Q de la bascule RS 282 fournit les deux fenêtres de gestion entre les éléments binaires 9 et 32 et 34 et 57 (figure 2B) de la trame, la sortie de la porte 285 fournit les données d'au moins un secteur d'usager, et la sortie de la porte $287_b$ fournit au moins une fenêtre de secteur d'usager à bas ou haut débit.

## Revendications

1. Trame de données multidébit à transmettre d'une station centrale (1) vers une pluralité de stations terminales ($2_1$ à $2_I$) et comprenant des secteurs d'usager ($S_0$ à $S_{J-1}$) qui sont occupés respectivement par des données destinées à des stations terminales parmi ladite pluralité de stations terminales ($2_1$ à $2_I$) en communication avec la station centrale (1) et qui ont différents débits qui ne sont pas multiples entre eux, caractérisée en ce qu'elle a une fréquence ($H_{1K}$) sous-multiple d'un plus grand commun diviseur des fréquences associées auxdits différents débits, et en ce que lesdits secteurs d'usager ($S_1$ à $S_{J-1}$) contiennent lesdites données auxdits différents débits en synchronisme avec des signaux d'horloge respectifs ($H_{155M}, H_{2M}$) ayant des déphasages qui sont périodiquement constants entre eux à une fréquence ($H_{64K}$) sous-multiple d'un plus grand commun diviseur des fréquences associées auxdits différents débits.

2. Trame de données multidébit conforme à la revendication 1, caractérisée en ce que lesdits secteurs d'usager ($S_1$ à $S_{J-1}$) sont précédés par un mot de verrouillage de trame (MVT) et des mots de gestion à un plus petit débit desdits différents débits, et par un signal d'horloge ($H_{155M}$) à une fréquence associée à un plus grand débit desdits différent débits.

3. Trame conforme à la revendication 2, dans laquelle ledit signal d'horloge à une fréquence associée audit plus grand débit occupe au moins deux emplacements (eb0, eb33) respectivement précédant le mot de verrouillage de trame (MVT) et succédant à celui-ci et chacun ayant au moins une durée d'un élément binaire audit plus petit débit.

4. Dispositif de multiplexage de données à différents débits non multiples pour former des trames conformes à l'une quelconque des revendications 1 à 3, à transmettre vers une pluralité de stations terminales ($2_1$ à $2_I$), caractérisé en ce qu'il comprend

des moyens de division en fréquence (11) pour diviser en fréquence l'un des signaux d'horloge ($H_{155M}$) en synchronisme avec des données à l'un desdits différents débits afin de produire un premier signal d'horloge ($H_{64K}$) ayant une fréquence sous-multiple du plus grand commun diviseur des fréquences associées auxdits différents débits,
des moyens d'asservissement (12) pour asservir en phase les autres signaux d'horloge ($H_{2M}$) avec ledit premier signal d'horloge ($H_{64K}$),
des moyens (10) pour produire un signal de référence ($H_{1K}$) ayant une fréquence de trame qui est sous-multiple d'un plus grand commun diviseur des fréquences associées auxdits différents débits, et
une pluralité de moyens de comptage (13,18) initialisés par ledit signal de référence ($H_{1K}$) et incrémentés respectivement par ledit un des signaux d'horloge ($H_{155M}$) et lesdits autres signaux d'horloge asservis ($H_{2M}$), de manière à attribuer sélectivement auxdits secteurs d'usager ($S_0, S_{J-1}$) respectivement des données en synchronisme avec ledit un des signaux d'horloge ($H_{155M}$) et lesdits autres signaux d'horloge asservis ($H_{2M}$) ayant des déphasages constants entre eux à la fréquence de trame du signal de référence ($H_{1K}$).

5. Dispositif de multiplexage conforme à la revendication 4, caractérisé en ce que lesdits moyens d'asservissement (12) comprennent sous la forme d'une boucle,

un moyen oscillateur à phase asservie (122) pour produire un signal d'horloge à fréquence multiple de la fréquence de l'un desdits autres signaux d'horloge asservis ($H_{2M}$),
des moyens de division en fréquence (123,124) pour diviser la fréquence du signal d'horloge produit par ledit moyen oscillateur (122) en lesdits autres signaux d'horloge ($H_{2M}$), et en un second signal d'horloge ($H'_{64K}$) ayant la même fréquence que ledit premier signal d'horloge ($H_{64K}$),
un moyen de comparaison (123) pour comparer les phases entre lesdits premier et second signaux d'horloge ($H_{64K}, H'_{64K}$), afin de produire un signal (DE) commandant ledit moyen oscillateur (122).

6. Dispositif de multiplexage conforme à la revendication 4 ou 5, caractérisé en ce qu'il comprend des moyens de génération d'impulsion (17) pour générer, en réponse à une première incrémentation de l'un (13) des moyens de comptage au début de chaque trame défini par ledit signal de référence ($H_{1K}$), une impulsion pour initialiser au moins l'un (18) des autres moyens de comptage à une valeur prédéterminée.

7. Dispositif de récupération de trame inclus dans une station terminale ($2_1$ à $2_I$) et destiné à recevoir des trames telles que celle conforme à la revendication 2 ou 3, caractérisé en ce qu'il comprend

des moyens de signalisation (21) pour signaler la fin d'un signal d'horloge ($H_{155M}$) ayant une fréquence correspondante au plus grand desdits différents débits et inclus dans chaque trame,
des premiers moyens ($235_a,236$) pour détecter une première partie du mot de verrouillage de trame ("111"), en réponse à la fin signalée dudit signal d'horloge ($H_{155M}$),
des seconds moyens ($235_b,237$) pour détecter une seconde partie ("01010") du mot de verrouillage de trame en réponse à la première partie détectée ("111"),
un moyen (22) pour asservir en phase un signal d'horloge d'incrémentation à une fréquence correspondante au plus petit débit, par rapport à ladite seconde partie du mot de verrouillage de trame (MVT), et

des moyens (22) pour compter des impulsions du signal d'horloge d'incrémentation en réponse à la seconde partie ("01010") détectée de manière à produire des signaux délimitant des secteurs attribués auxdites stations terminales ($2_1$ à $2_I$).

8. Dispositif de récupération de trame conforme à la revendication 7, dans lequel les premiers moyens pour détecter ($235_a,236$) comprennent un premier moyen de comptage ($235_a$) initialisé par ladite fin signalée dudit signal d'horloge ($H_{155M}$) et comptant des impulsions d'un signal prédéterminé d'horloge ($H_{19M}$) tant que des bits dans la trame sont à un état prédéterminé ("1") afin de signaler un nombre prédéterminé ($E_{24}$,3 bits) de bits ayant ledit état prédéterminé ("1") succédant à ladite fin signalée, et des moyens (236) recevant la trame pour déclencher lesdits seconds moyens pour détecter ($235_b,237$) en réponse audit nombre prédéterminé.

9. Dispositif de récupération de trame conforme à la revendication 7 ou 8, caractérisé en ce qu'il comprend, en outre,

des moyens ($250_a$) pour détecter le signal d'horloge ($H_{155M}$) à une fréquence associée audit plus grand débit dans un emplacement succédant au mot de verrouillage de trame (MVT) dans chaque trame,
des moyens (26) pour vérifier que le mot de verrouillage de trame (MVT) coincïde dans chaque trame avec une fenêtre temporelle produite par lesdits moyens (22) pour compter des impulsions du signal d'horloge d'incrémentation, et des moyens (266,274) pour commander la détection de la première partie ("111") du mot de verrouillage de trame (MVT) dans les premiers moyens pour détecter ($235_a,236$) en réponse, soit au défaut de détection dudit signal d'horloge ($H_{155M}$) audit plus grand débit dans ledit emplacement succédant, soit à des mots de verrouillage de trame incorrects dans des trames successives en un nombre prédéterminé.

**Patentansprüche**

1. Rahmen für Daten mit mehreren Übertragungsraten, die von einer Zentralstelle (1) zu einer Mehrzahl von Endstellen ($2_1$ bis $2_I$) zu übertragen sind und Benutzerabschnitte ($S_0$ bis $S_{J-1}$) enthalten, die jeweils mit Daten belegt sind, die für Endstellen unter der genannten Mehrzahl von Endstellen ($2_1$ bis $2_I$) bestimmt sind, die mit der Zentralstelle (1) in Verbindung stehen und verschiedene Übertragungsraten haben, die nicht Vielfache voneinander sind, dadurch gekennzeichnet, daß er eine Frequenz ($H_{1K}$)

hat, die im größten gemeinsamen Teiler der Frequenzen aufgeht, die den verschiedenen Übertragungsraten entsprechen, und dadurch, daß die genannten Benutzerabschnitte ($S_1$ bis $S_{J-1}$) die genannten Daten mit den verschiedenen Übertragungsraten synchron mit entsprechenden Taktsignalen ($H_{155M}$, $H_{2M}$) enthalten, die Phasenverschiebungen aufweisen, die mit einer Frequenz ($H_{64K}$) periodisch zueinander konstant sind, die im größten gemeinsamen Teiler der den genannten verschiedenen Übertragungsraten entsprechenden Frequenzen aufgeht.

2. Rahmen für Daten mit mehreren Übertragungsraten nach Patentanspruch 1, dadurch gekennzeichnet, daß den Benutzerabschnitten ($S_1$ bis $S_{J-1}$) ein Rahmensynchronisierwort (MVT) und Steuerworte mit einer kleineren Übertragungsrate, als die genannten verschiedenen Übertragungsraten, vorangeht, und ein Taktsignal ($H_{155M}$) mit einer Frequenz, die einer größten Übertragungsrate der genannten verschiedenen Übertragungsraten entspricht.

3. Rahmen nach Patentanspruch 2, in dem das genannte Taktsignal mit einer Frequenz, die der größten Übertragungsrate entspricht, mindestens zwei Stellen (eb0, eb33) besetzt, die dem Rahmensynchronisierwort (MVT) vorangehen bzw. ihm folgen, und jeweils mindestens die Dauer eines Binärelementes mit der genannten kleinsten Übertragungsrate haben.

4. Anordnung zur Multiplexierung von Daten mit verschiedenen Übertragungsraten, die nicht Vielfache voneinander sind, um Rahmen nach irgendeinem der Patentansprüche 1 bis 3 zu bilden, die an eine Vielzahl von Endstellen ($2_1$ bis $2_I$) zu übertragen sind, dadurch gekennzeichnet, daß sie enthält

Frequenzteilermittel (11), um die Frequenz eines der Taktsignale ($H_{155M}$) synchron mit den Daten in einer der genannten verschiedenen Übertragungsraten zu teilen, um ein erstes Taktsignal ($H_{64K}$) zu erzeugen, dessen Frequenz im größten gemeinsamen Teiler der den genannten verschiedenen Übertragungsraten entsprechenden Frequenzen aufgeht, Triggermittel (12), um die anderen Taktsignale ($H_{2M}$) mit dem genannten ersten Taktsignal ($H_{64K}$) in Phase zu triggern, Mittel (10), um ein Bezugssignal ($H_{1K}$) zu erzeugen, das eine Rahmenfrequenz hat, die im größten gemeinsamen Teiler der den genannten verschiedenen Übertragungsraten entsprechenden Frequenzen aufgeht, und eine Mehrzahl von Zählmitteln (13, 18), die vom genannten Bezugssignal ($H_{1K}$) initialisiert werden und von dem einen genannten Taktsignal

($H_{155M}$) bzw. den genannten anderen getriggerten Taktsignalen ($H_{2M}$) inkrementiert werden, derart, daß selektiv den genannten Benutzerabschnitten ($S_0$, $S_{J-1}$) Daten synchron mit dem genannten Taktsignal ($H_{155M}$) bzw. den genannten anderen getriggerten Taktsignalen ($H_{2M}$) zugewiesen werden, die konstante Phasenverschiebungen untereinander mit der Rahmenfrequenz des Bezugssignals ($H_{1K}$) haben.

5. Anordnung zur Multiplexierung nach Patentanspruch 4, dadurch gekennzeichnet, daß die genannten Triggermittel (12) in Form einer Schleife umfassen:

ein Oszillatormittel mit getriggerter Phase (122), um ein Taktsignal mit einer Frequenz zu erzeugen, die ein Vielfaches der Frequenz eines der genannten anderen getriggerten Taktsignale ($H_{2M}$) ist, Frequenzteilermittel (123, 124), um die Frequenz des von dem genannten Oszillatormittel (122) erzeugten Taktsignals in die genannten anderen Taktsignale ($H_{2M}$) zu teilen und in ein zweites Taktsignal ($H'_{64K}$), das dieselbe Frequenz hat, wie das genannte erste Taktsignal ($H_{64K}$), ein Vergleichermittel (123), um die Phasen zwischen den genannten ersten und zweiten Taktsignalen ($H_{64K}$, $H'_{64K}$) zu vergleichen, um ein Signal (DE) zu erzeugen, das das genannte Oszillatormittel (122) steuert.

6. Anordnung zur Multiplexierung nach Patentanspruch 4 oder 5, dadurch gekennzeichnet, daß sie Mittel zu Impulserzeugung (17) umfaßt, um in Antwort auf eine erste Inkrementierung des einen (13) der Zählmittel zu Beginn jedes Rahmens, definiert durch das genannte Bezugssignal ($H_{1K}$), einen Impuls zu erzeugen, um mindestens eines (18) der anderen Zählmittel auf einen vorbestimmten Wert zu initialisieren.

7. Anordnung zur Rahmenrückgewinnung in einer Endstelle ($2_1$ bis $2_I$), dazu bestimmt, Rahmen, wie den nach Patentanspruch 2 oder 3 zu empfangen, dadurch gekennzeichnet, daß sie umfaßt:

Meldemittel (21), um das Ende eines Taktsignals ($H_{155M}$) zu melden, das eine Frequenz hat, die der größten der genannten verschiedenen Übertragungsraten entspricht und in jedem Rahmen enthalten ist, erste Mittel ($235_a$, 236), um in Antwort auf das gemeldete Ende des genannten Taktsignals ($H_{155M}$) einen ersten Teil des Rahmensynchronisierwortes ("111") zu erkennen,

zweite Mittel ($235_b$, 237), um in Antwort auf den erkannten ersten Teil ("111") einen zweiten Teil ("01010") des Rahmensynchronisierwortes zu erkennen,

ein Mittel (22), um ein Inkrementierungstaktsignal mit einer der kleinsten Übertragungsrate entsprechenden Frequenz relativ zum genannten zweiten Teil des Rahmensynchronisierwortes (MVT) in Phase zu triggern, und

Mittel (22), um Impulse des Inkrementierungstaktsignals in Antwort auf den erkannten zweiten Teil ("01010") zu zählen, derart, daß Signale erzeugt werden, die Abschnitte begrenzen, die den genannten Endstellen ($2_1$ bis $2_I$) zugewiesen sind.

8. Anordnung zur Rahmenrückgewinnung nach Patentanspruch 7, in der die ersten Erkennungsmittel ($235_a$, 236) ein erstes Zählmittel ($235_a$) enthalten, das durch das genannte gemeldete Ende des genannten Taktsignals ($H_{155M}$) initialisiert wird und Impulse eines vorher festgelegten Taktsignals ($H_{19M}$) zählen, solange Bits im Rahmen in einem vorbestimmten Zustand ("1") sind, um eine vorher festgelegte Anzahl ($E_{24}$, 3 Bit) von Bits zu melden, die im genannten vorher festgelegten Zustand ("1") sind und auf das genannte gemeldete Ende folgen, und Mittel (236), die den Rahmen empfangen, um die genannten zweiten Erkennungsmittel ($235_b$, 236) in Antwort auf die genannte vorher festgelegte Zahl auszulösen.

9. Anordnung zur Rahmenrückgewinnung nach Patentanspruch 7 oder 8, dadurch gekennzeichnet, daß sie außerdem umfaßt:

Mittel ($250_a$) zum Erkennen des Taktsignals ($H_{155M}$) mit einer Frequenz, die der genannten größten Übertragungsrate entspricht, an einer Stelle, die auf das Rahmensynchronisierwort (MVT) in jedem Rahmen folgt,

Mittel (26) zur Prüfung, ob das Rahmensynchronisierwort (MVT) in jedem Rahmen mit einem Zeitfenster koinzidiert, das durch die genannten Mittel (22) zum Zählen der Impulse des Inkrementierungstaktsignals erzeugt wird, und

Mittel (266, 274), um die Erkennung des ersten Teils ("111") des Rahmensynchronisierwortes (MVT) in den ersten Erkennungsmitteln ($235_a$, 236) in Antwort entweder auf das Fehlen der Erkennung des genannten Taktsignals ($H_{155M}$) entsprechend der genannten größten Übertragungsrate an der genannten folgenden Stelle oder auf unkorrekte Rahmensynchronisierworte in aufeinanderfolgenden Rahmen in einer vorher festgelegten Anzahl zu steuern.

## Claims

1. Multi-rate data frame for transmitting from a central station (1) to a plurality of terminal stations ($2_1$ to $2_I$) and comprising user sectors ($S_0$ to $S_{J-1}$) which are occupied respectively by data intended for certain terminal stations among said plurality of terminal stations ($2_1$ to $2_I$) in communication with the central station (1) which have different rates which are not multiples of each other, characterised in that it has a frequency ($H_{1K}$) which is a submultiple of a largest common divisor of the frequencies associated with said different rates, and in that the user sectors ($S_1$ to $S_{J-1}$) contain said data at said different rates in synchronous with respective clock signals ($H_{155M}$, $H_{2M}$) having phase shifts which are periodically constant relative to one another at a frequency ($H_{64K}$) which is a submultiple of a largest common divisor of the frequencies associated with said different rates.

2. Multi-rate data frame according to claim 1, characterised in that said user sectors ($S_1$ to $S_{J-1}$) are preceded by a frame locking word (FLW) and control words at a lowest rate of said different rates, and by a clock signal ($H_{155M}$) at a frequency associated with a highest rate of said different rates.

3. Multi-rate data frame according to claim 2, wherein said clock signal at a frequency associated with the highest rate occupies at least two locations (ebO, eb33) respectively preceding and following the frame locking word (FLW) and each lasting at least as long as a binary element at said lowest rate.

4. Device for multiplexing data at different non-multiple rates to form frames according to any one of claims 1 to 3, for transmission to a plurality of terminal stations ($2_1$ to $2_I$), characterised in that it comprises

frequency division means (11) for frequency-dividing one of the clock signals ($H_{155M}$) in synchronous with the data at one of said different rates in order to produce a first clock signal ($H_{64K}$) having a frequency which is a submultiple of the largest common divisor of the frequencies associated with said different rates,

enslaving means (12) for phase locking the other clock signals ($H_{2M}$) with said first clock signal ($H_{64K}$),

means (10) for producing a reference signal ($H_{1K}$) having a frame frequency which is a submultiple of a largest common divisor of the frequencies associated with said different rates, and

a plurality of counting means (13, 18) initialised by said reference signal ($H_{1K}$) and incremented respectively by said one clock signal ($H_{155M}$) and said other phase-locked clock signals ($H_{2M}$), so as to allocate data selectively to said user sectors ($S_0$, $S_{J-1}$) respectively in synchronous with said one clock signal ($H_{155M}$) and said other phase-locked clock signals ($H_{2M}$) having constant phase shifts relative to one another at the frame frequency of the reference signal ($H_{1K}$).

5. Multiplexing device according to claim 4, characterised in that said enslaving means (12) comprise, in the form of a loop,

phase-locked oscillator means (122) for producing a clock signal at a frequency which is a multiple of the frequency of one of said other phase-locked clock signals ($H_{2M}$),

frequency division means (123, 124) for dividing the frequency of the clock signal produced by said oscillator means (122) into said other clock signals ($H_{2M}$), and into a second clock signal ($H'_{64K}$) having the same frequency as said first clock signal ($H_{64K}$),

comparator means (123) for comparing the phases of said first and second clock signals ($H_{64K}$, $H'_{64K}$), in order to produce a signal (DE) controlling said oscillator means (122).

6. Multiplexing device according to claim 4 or 5, characterised in that it comprises pulse generating means (17) for generating a pulse, in response to a first increment in one (13) of the counting means at the beginning of each frame defined by said reference signal ($H_{1K}$), in order to initialise at least one (18) of the other counting means at a predetermined value.

7. Frame recovery device included in a terminal station ($2_1$ to $2_I$) and intended to receive frames such as that defined in claim 2 or 3, characterised in that it comprises

signalling means (21) for indicating the end of a clock signal ($H_{155M}$) having a frequency corresponding to the highest of said different rates and included in each frame,

first means ($235_a$, 236) for detecting a first part of the frame locking word ("111") in response to the signalled end of said clock signal ($H_{155M}$),

second means ($235_b$, 237) for detecting a second part ("01010") of the frame locking word in response to the detected first part ("111"),

means (22) for phase locking an incremental clock signal at a frequency corresponding to the lowest rate, relative to said second part of the frame locking word (FLW), and

means (22) for counting the pulses of the incremental clock signal in response to the detected second part ("01010") so as to produce signals which delimit the sectors allocated to said terminal stations ($2_1$ to $2_I$).

8. Frame recovery device according to claim 7, wherein the first detecting means ($235_a$, 236) comprise first counting means ($235_a$) initialised by said signalled end of said clock signal ($H_{155M}$) and counting the pulses of a predetermined clock signal ($H_{19M}$) as long as bits in the frame are in a predetermined state ("1") in order to signal a predetermined number ($E_{24}$, 3 bits) of bits which are in said predetermined state ("1") following said signalled end, and means (236) receiving the frame in order to trigger said second detecting means ($235_b$, 237) in response to said predetermined number.

9. Frame recovery device according to claim 7 or 8, characterised in that it further comprises

means ($250_a$) for detecting the clock signal ($H_{155M}$) at a frequency associated with said highest rate in a location following the frame locking word (FLW) in each frame,

means (26) for checking that the frame locking word (FLW) coincides in each frame with a temporal window produced by said means (22) for counting the pulses of the incremental clock signal, and

means (266, 274) for controlling the detection of the first part ("111") of the frame locking word (FLW) in the first detecting means ($235_a$, 236) in response either to the absence of any detected clock signal ($H_{155M}$) at said highest rate in said following location, or to incorrect frame locking words in a predetermined number of successive frames.

# FIG. 1

TERMINAISONS NUMERIQUES
DE RESEAU OPTIQUE
(DISPOSITIF DE RECUPERATION DE TRAME, FIG.5)

hiérarchie
plésiochrone
( n x 2,048 Mbit/s)

vers
CENTRAL

ATM
(155,520 Mbit/s)

TERMINAL
DE
LIGNE
OPTIQUE
(TLO)

(FIG.3)

1

11

COUPLEUR
PASSIF

$2_1$ — 2,048 Mbit/s

$2_i$ — n x 2,048 Mbit/s

$2_I$ — n x 2,048 Mbit/s
+
155,540 Mbit/s

vers
USAGERS

EP 0 605 267 B1

# FIG.2A

1 ms

équivalent à 2048 bits à 2,048 Mbit/s
ou équivalent à (329 x 59 + 29) octets à 155,520 Mbit/s

eb  0             57                                   2047

| (FIG.2B) | $S_0$ | $S_1$ | $S_{J-3}$ | $S_{J-2}$ | $S_{J-1}$ |

GESTION                       8 secteurs d'usager

# FIG.2B

MVT      gestion bas débit      gestion haut débit

0      10      20      30    33      40      50      57

1 1 1 0 1 0 1 0

$H_{155M}$                             $II_{155M}$           eb 2,048 Mbit/s

EP 0 605 267 B1

*FIG. 3*

# FIG.4

## DISPOSITIF DE SYNCHRONISATION DE SECTEURS

FIG.5

DISPOSITIF DE RECUPERATION DE TRAME

EP 0 605 267 B1

# FIG.6

EP 0 605 267 B1

CIRCUIT DE SIGNALISATION DE FIN DE PREMIER
ELEMENT BINAIRE

21

IMP

} vers
} 232

210

211

212

D  Q

D  Q

$\overline{Q}$

$\overline{Q}$

TRAME

213

214

} vers
} 235$_a$

$H_{19M}$

de 20

} vers circuit 26

# FIG.7

EP 0 605 267 B1

vers D
de 274

260

TRAME

$S_D$

26

CIRCUIT DE VERIFICATION
PERIODIQUE DE MVT

261

262    263    264

265

266

de 255 b    $\overline{FMVT}$

Q de 274

RAZMT    267

$\overline{Q}$ de 250 a
(33$^{ieme}$ eb)

$\overline{RAZMT}$

268

vers 286